# EUROPÄISCHE PATENTANMELDUNG

(11) **EP 4 538 580 A1**
(43) Veröffentlichungstag der Anmeldung: **16.04.2025**
(21) Anmeldenummer: 23203476.9
(22) Anmeldetag: 13.10.2023
(51) Int. Cl.: F16P 3/14

(54) **SICHERHEITSEINRICHTUNG UND VERFAHREN ZUM BETRIEB EINER SICHERHEITSEINRICHTUNG**

(71) Anmelder: Leuze electronic GmbH + Co KG, 73277 Owen/Teck (DE)
(72) Erfinder: Feller, Bernhard, 86316 Friedberg (DE)
(74) Vertreter: Ruckh, Rainer Gerhard

(57) **Zusammenfassung**

Die Erfindung betrifft eine Sicherheitseinrichtung (1) mit einem Sicherheitssensor (4) und einem Mutingsensor (7), wobei der Sicherheitssensor (4) zur Überwachung eines Überwachungsbereichs ausgebildet ist. Der Sicherheitssensor (4) ist ausgebildet eine Sicherheitsfunktion auszulösen, wenn dieser einen Objekteingriff im Überwachungsbereich detektiert. Der Mutingsensor (7) ist ausgebildet, ein zulässiges Objekt zu detektieren, wobei mittels der Sicherheitseinrichtung (1) die Sicherheitsfunktion überbrückt wird, wenn mittels des Mutingsensors (7) ein zulässiges Objekt detektiert wird. Der Mutingsensor (7) ist ein optischer Sensor, welcher als Empfängereinheit einen Bildsensor (13) aufweist, wobei mit dem optischen Sensor ein bewegliches Objekt in wenigstens zwei unterschiedlichen Positionen erfasst wird. Anhand der dabei mit dem Bildsensor (13) detektierten Muster wird beurteilt, ob das Objekt ein zulässiges Objekt ist oder nicht.

## Beschreibung

Die Erfindung betrifft eine Sicherheitseinrichtung und ein Verfahren zum Betrieb einer Sicherheitseinrichtung.

Derartige Sicherheitseinrichtungen werden im Bereich der Sicherheitstechnik, insbesondere im Bereich des Personenschutzes eingesetzt.

Derartige Sicherheitseinrichtungen weisen generell einen Sicherheitssensor auf, mit dem ein Überwachungsbereich überwacht wird. Der Überwachungsbereich kann von einem Gefahrenbereich einer Anlage oder vom Zugang zum Gefahrenbereich einer Anlage gebildet sein. Der Sicherheitssensor weist zur Erfüllung der normativen Sicherheitsanforderungen einen fehlersicheren Aufbau auf. Ein Beispiel für einen derartigen Sicherheitssensor ist ein Lichtvorhang, mit dem ein flächiger Überwachungsbereich überwacht wird.

Die Funktion eines solchen Sicherheitssensors ist derart, dass mit dessen Sensorkomponenten Objekte in dem Überwachungsbereich erfasst werden können. Abhängig von den Sensorsignalen der Sensorkomponenten wird in einer Auswerteelektronik des Sicherheitssensors als Objektfeststellungssignal ein binäres Schaltsignal generiert, das an die Steuerung der Anlage ausgegeben wird. Die Schaltzustände des Schaltsignals geben an, ob sich ein Objekt im Überwachungsbereich befindet oder nicht.

Wird mit dem Sicherheitssensor ein Objekt im Überwachungsbereich detektiert, löst der Sicherheitssensor eine Sicherheitsfunktion aus. Dies erfolgt vorteilhaft derart, dass mit dem ausgegebenen Schaltsignal der Sicherheitssensor die Steuerung der Anlage ansteuert, so dass die Anlage in einen sicheren Zustand versetzt wird, so dass von der Anlage keine Gefahren mehr ausgehen können. Insbesondere wird die Anlage stillgesetzt.

Damit können insbesondere Personen vor Gefahren geschützt werden.

Jedoch ist es erforderlich, während des Betriebs der Anlage nicht sicherheitskritische Objekte, wie Transportfahrzeuge und/oder zu bearbeitende Materialien der Anlage zuzuführen oder aus der Anlage herauszuführen, die hierzu den Überwachungsbereich passieren müssen. Da diese Objekte nicht sicherheitskritisch sind, würde ein Auslösen der Sicherheitsfunktion durch die Detektion mittels des Sicherheitssensors zu einem unnötigen Stillsetzen der Anlage führen, d.h. deren Verfügbarkeit wäre unnötig reduziert.

Um dies zu vermeiden, ist es bekannt, den Sicherheitssensor in einem Mutingbetrieb zu betreiben, wenn nicht sicherheitskritische Objekte den Überwachungsbereich passieren. Im Mutingbetrieb wird der Sicherheitssensor gemutet, d.h. überbrückt, so dass ein Objekteingriff im Überwachungsbereich nicht zum Auslösen der Sicherheitsfunktion führt. Damit können nichtsicherheitskritische Objekte den Überwachungsbereich passieren, ohne dass die Anlage unnötig stillgesetzt wird.

Der Mutingbetrieb wird abhängig von Signalen eines oder mehrerer Mutingsensoren gesteuert. Die Mutingsensoren können beispielsweise in Form von Lichtschranken gebildet sein.

Generell wird mit den Mutingsensoren ein sich auf den Überwachungsbereich zu bewegendes Objekt detektiert. In einer die Mutingsensoren auswertenden Überwachungseinrichtung wird das Objekt anhand der Sensorsignale klassifiziert, d.h. es erfolgt eine Unterscheidung, ob ein nichtsicherheitskritisches Objekt und damit ein zulässiges Objekt, oder ob es sich um ein sicherheitskritisches Objekt, wie z.B. eine Person, handelt.

Nur wenn das Objekt als zulässiges Objekt klassifiziert ist, wird der Sicherheitssensor gemutet, so dass dieses zulässige Objekt den Überwachungsbereich passieren kann, ohne dass der Sicherheitssensor die Sicherheitsfunktion auslöst.

Damit wird mit der Sicherheitseinrichtung bei einem hohen Sicherheitsniveau eine hohe Verfügbarkeit erzielt.

Ein Nachteil der bekannten Sicherheitseinrichtung besteht darin, dass mit den Mutingsensoren eine sichere Unterscheidung von sicherheitskritischen Objekten und nichtsicherheitskritischen Objekten nicht oder nur mit hohem konstruktivem Aufwand möglich ist.

Der Erfindung liegt die Aufgabe zugrunde für eine Sicherheitseinrichtung der eingangs genannten Art mit geringem konstruktivem Aufwand eine sichere und zuverlässige Mutingfunktion bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sicherheitseinrichtung mit einem Sicherheitssensor und einem Mutingsensor, wobei der Sicherheitssensor zur Überwachung eines Überwachungsbereichs ausgebildet ist. Der Sicherheitssensor ist ausgebildet eine Sicherheitsfunktion auszulösen, wenn dieser einen Objekteingriff im Überwachungsbereich detektiert. Der Mutingsensor ist ausgebildet, ein zulässiges Objekt zu detektieren, wobei mittels der Sicherheitseinrichtung die Sicherheitsfunktion überbrückt wird, wenn mittels des Mutingsensors ein zulässiges Objekt detektiert ist. Der Mutingsensor ist ein optischer Sensor, welcher als Empfängereinheit einen Bildsensor aufweist, wobei mit dem optischen Sensor ein bewegliches Objekt in wenigstens zwei unterschiedlichen Positionen erfasst wird. Anhand der dabei mit dem Bildsensor detektierten Mustern wird beurteilt, ob das Objekt ein zulässiges Objekt ist oder nicht.

Die Erfindung betrifft auch ein entsprechendes Verfahren.

Die erfindungsgemäße Sicherheitseinrichtung weist generell einen Sicherheitssensor als wesentliche Sicherheitskomponente auf. Der Sicherheitssensor überwacht einen Überwachungsbereich auf das Eindringen von Objekten und löst im sicheren Normalbetrieb dann, wenn dieser ein Objekt im Überwachungsbereich detektiert, eine Sicherheitsfunktion aus.

Die Sicherheitseinrichtung wird insbesondere zur Absicherung eines Gefahrenbereichs einer Anlage eingesetzt. Mit dem Sicherheitssensor wird dieser Gefahrenbereich oder der Zugang zu diesem Gefahrenbereich überwacht.

Die mit dem Sicherheitssensor ausgelöste Sicherheitsfunktion besteht dann darin die Anlage in einen sicheren Zustand zu versetzen, insbesondere stillzusetzen.

Erfindungsgemäß weist die Sicherheitseinrichtung einen Mutingsensor auf, so dass der Sicherheitssensor in einem Mutingbetrieb betrieben werden kann. Im Mutingbetrieb ist der Sicherheitssensor gemutet, d.h. dessen Sicherheitsfunktion ist überbrückt, d.h. eine Objektdetektion mit dem Sicherheitssensor führt dann nicht zum Auslösen der Sicherheitsfunktion.

Voraussetzung dafür, dass der Sicherheitssensor nicht im Normalbetrieb, sondern im Mutingbetrieb betrieben wird, ist, dass mit dem Mutingsensor ein sich dem Überwachungsbereich näherndes Objekt als zulässiges Objekt, d.h. als nichtsicherheitskritisches Objekt erkannt wird. Der Mutingbetrieb des Sicherheitssensors wird dann temporär aufrechterhalten, vorteilhaft so lange wie das zulässige Objekt für das Passieren des Überwachungsbereichs benötigt.

Damit wird die Verfügbarkeit des Gesamtsystems erhöht, da das Eindringen des zulässigen Objekts in den Überwachungsbereich nicht zu einer unnötigen Auslösung der Sicherheitsfunktion führt. Umgekehrt wird der Sicherheitssensor im Normalbetrieb betrieben, wenn sich kein zulässiges Objekt im Überwachungsbereich befindet. Damit führt ein Eindringen des sicherheitskritischen Objekts, insbesondere Personen in dem Überwachungsbereich zur Auslösung der Sicherheitsfunktion. Damit ist eine sichere Überwachungsfunkton der Sicherheitseinrichtung gewährleistet.

Erfindungsgemäß ist der Mutingsensor der Sicherheitseinrichtung in Form eines optischen Sensors ausgebildet, wobei der optische Sensor als Empfängereinheit einen Bildsensor aufweist. Der Bildsensor kann beispielsweise von einem CMOS- oder CCD-Array gebildet sein. Vorteilhaft ist dem Empfänger eine Sendelichtstrahlen emittierende Sendereinheit zugeordnet.

Erfindungsgemäß wird zur Beurteilung, ob ein zulässiges Objekt vorhanden ist oder nicht, mit dem Mutingsensor ein sich bewegendes, vorzugsweise ein sich auf den Überwachungsbereich zu bewegendes Objekt in wenigstens zwei unterschiedlichen Positionen detektiert, wobei das Objekt nicht in seiner Gesamtheit mit dem Mutingsensor erfasst wird, sondern nur ein Muster dieses Objekts.

Das Muster kann von einer spezifischen Markierung, einem spezifischen Kontrastmuster und dergleichen gebildet sein.

Durch die Erfassung des Musters an zwei unterschiedlichen Positionen des Objekts werden verschiedene Bilder des Objekts erhalten. Dadurch erfolgt eine dynamisierte Bilderfassung, die im Vergleich zur statischen Erfassung nur eines Bildes eine erheblich sicherere Objekterkennung, im vorliegenden Fall Mustererkennung ermöglicht.

Dadurch wird eine entsprechend sichere Klassifizierung, ob es sich bei dem detektierenden Objekt um ein zulässiges Objekt handelt oder nicht, gewährleistet.

Da die Erfassung dieses zulässigen Objekts eine wesentliche und notwendige Voraussetzung dafür ist, ob der Sicherheitssensor vom Normalbetrieb in den Mutingbetrieb versetzt wird oder nicht, wird durch die erfindungsgemäße sichere Erkennung von zulässigen Objekten auch eine entsprechend sichere Aktivierung des Mutingbetriebs des Sicherheitssensors ermöglicht.

Gemäß einer vorteilhaften Ausführungsfunktion werden die detektierten Muster mit jeweils einer in dem Mutingsensor abgespeicherten vollständigen oder teilweisen Kontur eines zulässigen Objekts verglichen.

Gemäß einer weiteren Ausführung werden die ermittelten ersten Muster zu einem ersten Zeitpunkt ermittelt und zu späteren Zeitpunkten weitere Muster erfasst und mit dem ersten Muster verglichen. Gleichmäßig gefördertes Transportmaterial weist im Gegensatz zu Personen keine ungleichförmigen Bewegungen mit zeitlich wechselnden Versätzen, sondern einen zeitlich linearen Versatz auf, somit kann das zulässige Objekt anhand von gleichförmigen linearen Versätzen des gleichen Musters ermittelt werden. Gegebenenfalls sind dazu perspektivische Verzerrungen der Kamera bei der Bestimmung der Versätze durch Korrekturen in Abhängigkeit von der Bewegungsrichtung des Transportmaterials relativ zur Kamera zu berücksichtigen.

Weiterhin kann der Musterversatz mit Positions- oder Bewegungssignalen der Transporteinrichtung verglichen werden, um den Mutingsensor zusätzlich zu überwachen.

Die Konturen können als Parameter im Mutingsensor hinterlegt oder in einem Einlernvorgang ermittelt werden, wobei insbesondere Konturen mehrerer zulässiger Objekte hinterlegt werden können.

Durch den Konturvergleich können zulässige Objekte sicher identifiziert werden.

Eine weitere Verbesserung kann erzielt werden, wenn die ermittelten Muster durch Bildverarbeitungsfilter, die wesentliche Eigenschaften von Mustern hervorheben und weniger wichtige Eigenschaften unterdrücken, gefiltert werden. Solche Bildverarbeitungsfilter können insbesondere Filter sein, die die Kanten hervorheben oder kontrastverstärkend wirken. Ebenso sind Bildverarbeitungsfilter von Vorteil, die regelmäßige Muster wie sie in Transportgütern vorkommen (Gitter, Streifen, Linien), besonders hervorheben.

Gemäß einer ersten Variante wird abhängig von Empfangssignalen des Bildsensors im Mutingsensor ein Mutingsignal generiert, mittels dessen der Sicherheitssensor angesteuert wird.

Die Generierung von Mutingsignalen zur Steuerung des Mutingbetriebs erfolgt somit im Mutingsensor selbst. Im Mutingsensor generierte Mutingsignale werden dann an den Sicherheitssensor ausgegeben.

Gemäß einer zweiten Variante werden Empfangssignale des Mutingsensors an den Sicherheitssensor übertragen, wobei im Sicherheitssensor ein Mutingsignal generiert wird.

In diesem Fall werden Signale, die bei der Erkennung des Musters eines Objekts mit dem Bildsensor generiert werden, in den Sicherheitssensor einge-lesen. Daraus werden im Sicherheitssensor selbst Mutingsignale abgeleitet.

Mit ersten Mutingsignalen kann ein Muting des Sicherheitssensors initiiert werden. Mit zweiten Mutingsignalen kann ein Muting des Sicherheitssensors, bestätigt werden. Mit Deaktivierung der Signale kann das Muting beendet werden.

Gemäß einer vorteilhaften Weiterbildung wird im Mutingsensor die Wegstrecke und/oder Bewegungsrichtung des detektierten Objekts innerhalb des Zeitintervalls zwischen den Detektionen der beiden Muster bestimmt und als Kriterium für das Vorhandensein eines zulässigen Objekts herangezogen.

Somit wird als Kriterium für die Erkennung eines zulässigen Objekts nicht nur das Erkennen eines Musters in unterschiedlichen Positionen des Objekts herangezogen. Vielmehr wird auch die Wegstrecke und/oder Bewegungsrichtung des Objekts zwischen den Bildaufnahmen der Muster überwacht.

Im einfachsten Fall werden zu definierten, verschiedenen Ausnahmezeitpunkten zwei Bilder des Musters aufgenommen. Im Zeitintervall zwischen diesen Aufnahmezeitpunkten wird dann die Wegstrecke und/oder Bewegungsrichtung des Objekts erfasst.

Damit ein zulässiges Objekt vorliegt, wird gefordert, dass die ermittele Wegstrecke bzw. Bewegungsrichtung jeweils innerhalb eines vorgegebenen Sollwertbereichs liegt oder einem vorgegebenen Grenzwert entspricht.

Die Wegstrecken und Bewegungsrichtungen bzw. deren Sollwertbereiche können in Einlernvorgängen bestimmt werden.

Gemäß einer zweckmäßigen Weiterbildung weist der Mutingsensor zwei räumlich versetzt angeordnete Bildsensoren auf, mittels derer diversitäre Bildaufnahmen generiert werden.

Mit den beiden Bildsensoren werden nicht nur durch den Zeitversatz von Bildaufnahmen, sondern auch durch den räumlichen Vorsatz der Bildsensoren diversitäre Bildinformationen erhalten, wodurch eine besonders sichere Erkennung von zulässigen Objekten ermöglicht wird.

Gemäß einer vorteilhaften Ausführungsform generiert der Mutingsensor fehlersichere Signale.

Dadurch wird Sicherheit bei der Generierung und Überwachung des Mutingebetriebs gewährleistet.

Vorteilhaft weist hierzu der Mutingsensor eine mehrkanalige Auswerteeinheit auf, wobei in der Auswerteeinheit Empfangssignale des oder jedes Bildsensors ausgewertet werden.

Durch die mehrkanalige Struktur der Auswerteeinheit wird eine fehlersichere Auswertung der Bildsignale des oder jedes Bildsensors gewährleistet.

Gemäß einer vorteilhaften Ausgestaltung weist die Auswerteeinheit zwei Controllerkanäle auf.

Damit wird eine fehlersichere zweikanalige Struktur der Auswerteeinheit realisiert.

Gemäß einer konstruktiv vorteilhaften Ausgestaltung sind die Controllerkanäle in Form eines Mehrkernprozessors ausgeführt.

Weiter vorteilhaft werden die Controllerkanäle mittels eines Watchdogs überwacht.

Durch die Überwachungsfunktion des Watchdogs können Fehler in den Controllerkanälen aufgedeckt werden. Insbesondere kann mit dem Watchdog ein Ausfall eines Controllerkanals, d.h. ein Einfrieren des Controllerkanals detektiert werden. Der Watchdog deaktiviert dann das mit diesem Controllerkanal generierte Signal und vermeidet dadurch Fehlfunktionen.

Gemäß einer weiteren vorteilhaften Ausführungsform werden im Mutingsensor oder im Sicherheitssensor die zeitlichen Abstände von im Mutingsensor generierten Signalen überwacht.

Dabei wird der zeitliche Abstand der Signale mit einer vorgegebenen Erwartungshaltung, d.h. vorgegebenen Sollwerten verglichen. Dadurch ist eine fehlersichere Signalgenerierung gewährleistet.

Die Erfindung wird im Folgenden anhand der Zeichnungen erläutert. Es zeigen:
- Figur 1:: Ausführungsbeispiel der erfindungsgemäßen Sicherheitseinrichtung.
- Figur 2:: Beispiel eines Sicherheitssensor für die Sicherheitseinrichtung gemäß Figur 1.
- Figur 3:: Beispiel eines Mutingsensors für die Sicherheitseinrichtung gemäß Figur 1.
- Figur 4:: Beispiel einer Auswerteeinheit des Mutingsensors gemäß Figur 3.
- Figur 5:: Beispiel von Obj ekterfassungen mit dem Mutingsensor gemäß Figur 1.

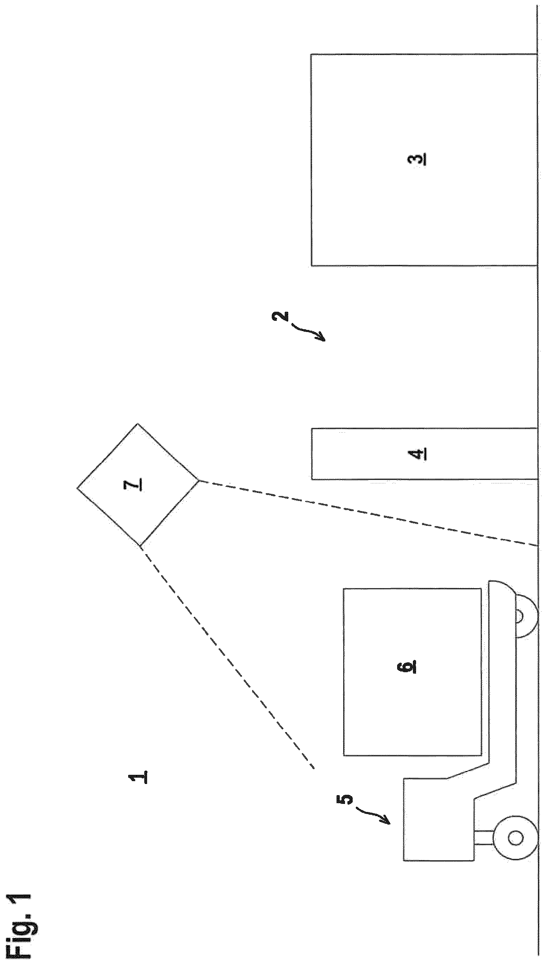

Figur 1 zeigt stark schematisiert ein Ausführungsbeispiel der erfindungsgemäßen Sicherheitseinrichtung 1. Die Sicherheitseinrichtung 1 dient zur Überwachung eines Gefahrenbereichs 2 an einer Anlage 3.

Die Sicherheitseinrichtung 1 weist einen Sicherheitssensor 4 auf, mit dem ein Überwachungsbereich überwacht wird. Der Sicherheitssensor 4 ist im vorliegenden Fall derart ausgebildet, dass mit diesem der Zugang zum Gefahrenbereich 2 überwacht wird.

Im Normalbetrieb generiert der Sicherheitssensor 4 als Objektfeststellungssignal ein binäres Schaltsignal, dessen Schaltzustände angeben, ob mit dem Sicherheitssensor 4 ein Objekt im Überwachungsbereich erkannt wurde oder nicht. Wird mit dem Sicherheitssensor 4 ein Objekt im Überwachungsbereich erkannt, wird durch das Schaltsignal eine Sicherheitsfunktion ausgelöst. Im vorliegenden Fall wird mit dem Schaltsignal eine Steuerung der Anlage 3 angesteuert, so dass diese in einen sicheren Zustand überführt wird. Insbesondere wir die Anlage 3 stillgesetzt.

Mit dieser Sicherheitsfunktion wird ein sicherer Betrieb der Anlage 3 gewährleistet. Insbesondere werden Gefährdungen von Personen vermieden, da dann, wenn eine Person den Überwachungsbereich passiert, der Sicherheitssensor 4 die Sicherheitsfunktion generiert.

Um die Verfügbarkeit der Anlage 3 zu erhöhen, kann der Sicherheitssensor 4 in einem Mutingbetrieb betrieben werden, in dem die Sicherheitsfunktion temporär gemutet, d.h. stummgeschaltet ist.

Im Mutingbetrieb können nichtsicherheitskritische Objekte, wie das in Figur 1 dargestellte Fahrzeug 5, das eine Palette zur Anlage 3 transportiert, den Überwachungsbereich des Sicherheitssensors 4 passieren, ohne dass der Sicherheitssensor 4 die Sicherheitsfunktion auslöst. Der Mutingbetrieb ist vorteilhaft so lange aktiviert wie das nichtsicherheitskritische Objekt zum Passieren des Überwachungsbereichs benötigt.

Der Mutingbetrieb wird abhängig von Mutingsignalen gesteuert, die abhängig von Sensorsignalen eines Mutingsensors 7 generiert werden.

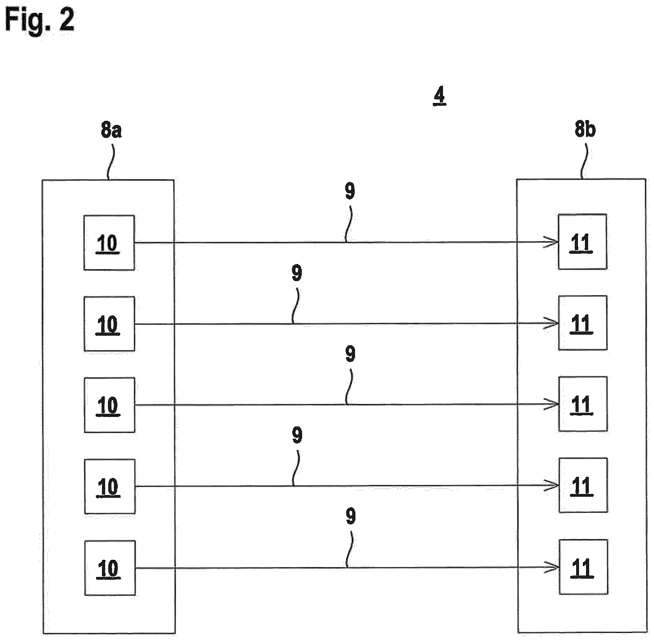

Figur 2 zeigt ein Ausführungsbeispiel eines Sicherheitssensors 4 in Form eines Lichtvorhangs. Der Lichtvorhang weist ein erstes Gehäuse 8a auf, in welchem eine Reihenanordnung von Lichtstrahlen 9 emittierenden Sendern 10 vorhanden ist. Zudem ist eine nicht dargestellte Sendersteuerung vorhanden, die den Betrieb der Sender 10 steuert. Der Lichtvorhang weist weiterhin ein zweites Gehäuse 8b auf, in welchem eine Reihenanordnung von Empfängern 11 vorhanden ist. Zudem ist im zweiten Gehäuse 8b eine nicht dargestellte Auswerteelektronik vorhanden. Mit der Auswerteelektronik erfolgt eine Ansteuerung der Empfänger 11 und die Auswertung von Empfangssignalen der Empfänger 11 zur Generierung des Schaltsignals. Zur Erfüllung der normativen Sicherheitsanforderungen weist die Auswerteelektronik einen fehlersicheren Aufbau auf, vorzugsweise in Form zweier sich gegenseitig zyklisch überwachender Rechnereinheiten.

Die Gehäuse 8a, 8b des Lichtvorhangs sind an gegenüberliegenden Rändern des Überwachungsbereichs so angeordnet, dass bei freiem Überwachungsbereich die Lichtstrahlen 9 jedes Senders 10, wie in Figur 2 dargestellt auf einen zugeordneten Empfänger 11 treffen. Bei einem Objekteingriff im Überwachungsbereich wird der Strahlengang der Lichtstrahlen 9 wenigstens eines Senders 10 unterbrochen. Durch diese Strahlunterbrechung wird das Objekt detektiert. In einer ähnlichen Anordnung kann der Sicherheitssensor 4 auch durch Sender und Empfänger in einem Gehäuse an einem Rand des Überwachungsbereichs und Reflektoren am gegenüberliegendem Rand des Überwachungsbereichs gebildet sein.

Der Sicherheitssensor 4 kann auch in Form eines anderen Sensors, insbesondere in Form eines optischen Sensors, ausgebildet sein. Beispielsweise kann der Sicherheitssensor 4 als Flächendistanzsensor, d.h. scannender Distanzsensor gebildet sein. Wie bei einem Lichtvorhang wird mit dem Flächendistanzsensor ein flächiger Überwachungsbereich überwacht.

Weiterhin kann der Sicherheitssensor 4 als 3D-Kamera ausgebildet sein, bei den Distanzmessungen nach einem Impuls-Laufzeit-Verfahren durchgeführt werden. Mit einem derartigen Sicherheitssensor 4 wird ein dreidimensionaler Raumbereich überwacht. In diesem Fall ist es möglich, mit dem Sicherheitssensor 4 den gesamten Gefahrenbereich 2 zu überwachen.

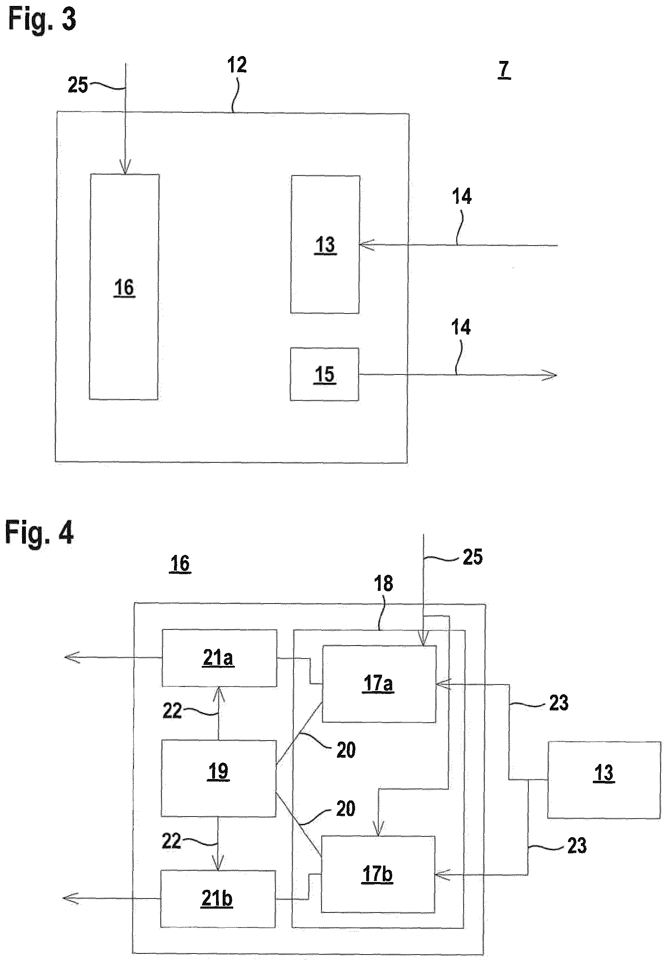

Figur 3 zeigt in stark schematisierter Form ein Ausführungsbeispiel des Mutingsensors 7 der Sicherheitseinrichtung 1 gemäß Figur 1. In einem Sensorgehäuse 12 sind die Komponenten des Mutingsensors 7 integriert. Diese umfassen eine Empfängereinheit in Form eines Bildsensors 13, der einer Lichtstrahlen 14 emittierende Sendereinheit 15 zugeordnet ist. Der Bildsensor 13 kann von einem zeilen- oder matrixförmigen CMOS-Array oder CCD-Array gebildet sein. Von einem Objekt reflektierte Lichtstrahlen 14 treffen auf den Bildsensor 13. Die dabei generierten Empfangssignale der einzelnen lichtempfindlichen Empfangssignale werden in einer Auswerteeinheit 16 des Mutingsensors 7 ausgewertet. In einer anderen Ausführung kann die Sendeeinheit 15 entfallen und es wird Umgebungslicht am Objekt reflektiert und diese treffen auf den Bildsensor 13. Falls die Transporteinrichtung ein Positions-/Bewegungssignal 25 liefert, kann dieses zusätzlich ausgewertet werden und dadurch der ermittele Musterversatz zusätzlich überprüft werden.

Die Auswerteeinheit 16 weist einen mehrkanaligen Aufbau auf und ist dadurch fehlersicher ausgebildet.

Wie Figur 4 zeigt, ist im vorliegenden Fall die Auswerteeinheit 16 zweikanalig ausgebildet und weist zwei Controllerkanäle auf. Jeder Controllerkanal weist einen Controller 17a, 17b auf. Die Controller 17a, 17b können auch Bestandteil eines Mehrkernprozessors 18 sein.

Die Controller 17a, 17b werden von einem Watchdog 19 überwacht.

Im vorliegenden Fall ist der Watchdog-Controller nicht Bestandteil des Mehrkernprozessors 18.

Alternativ kann der Watchdog-Controller von einem Rechenkern des Mehrkernprozessors 18 gebildet sein.

Der Watchdog-Controller ist jeweils über ein Interface 20 mit den Controllern 17a, 17b verbunden, wobei das Interface 20 ein serielles oder paralleles Interface 20 sein kann. Der Watchdog-Controller kommuniziert mit den Controllern 17a, 17b über die Interfaces 20.

An jeden der Rechnerkerne 17a, 17b ist ein Schnittstellenmodul 21a, 21b angeschlossen.

Die Schnittstellenmodule 21a, 21b sind über Steuerleitungen 22 mit dem Watchdog-Controller verbunden.

Die Schnittstellenmodule 21a, 21b bilden eine zweikanalige Ausgansstruktur des Mutingsensors 7. Generell kann auch eine einkanalige Ausgansstruktur vorhanden sein.

Die Empfangssignale des Bildsensors 13 werden über Leitungen 23 dem Controllerkanal zugeführt und in diesem zweikanalig ausgewertet.

Prinzipiell kann der Mutingsensor 7 auch zwei Bildsensoren 13 aufweisen, mit denen unterschiedliche Bilder von Objekten aufgenommen werden, wodurch diversitäre Bildinformationen von dem Objekt gewonnen werden. Vorteilhaft ist es, wenn diese Bildsensoren 13 versetzt angeordnet sind um gleichzeitig verschiedene Blickwinkel oder Positionen zu erfassen.

Die Empfangssignale jedes Bildsensors 13 können in jeweils einem der Controllerkanäle ausgewertet werden. Alternativ können die Empfangssignale beider Bildsensoren 13 beider Controllerkanäle zugeführt werden.

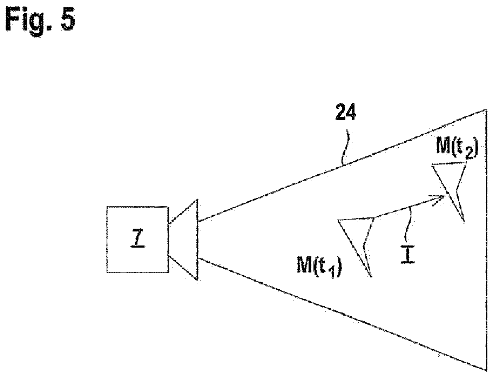

Die Funktion des Mutingsensors 7 wird anhand von Figur 5 erläutert. Der Mutingsensor 7 ist so angeordnet, dass mit diesem das Vorfeld des mit dem Sicherheitssensors 4 überwachten Überwachungsbereichs erfasst wird.

Figur 5 zeigt das Sichtfeld 24 des Bildsensors 13 des Mutingsensors 7, innerhalb dessen Objekte erfasst werden können.

Erfindungsgemäß werden zur Beurteilung, ob es sich bei einem mit dem Mutingsensor 7 erfassten, bewegten Objekt um ein zulässiges Objekt handelt, Muster dieses Objektes zu verschiedenen Zeitpunkten aufgenommen. Durch die Bewegung des Objekts werden dadurch diversitäre Bildinformationen von dem jeweils detektierten Objekt erhalten, wodurch eine sichere Objektdetektion gewährleistet ist. Dies ist in Figur 5 veranschaulicht. Dort ist das Muster in einer ersten Position zu einem Zeitpunkt ti dargestellt, dass im Mutingsensor 7 als Musterabbildung M (t₁) registriert wird. Zudem ist das Muster zu einem späteren Zeitpunkt als t₂ dargestellt, dass im Mutingsensor 7 als Musterabbildung M (t₂) registriert wird.

Unterschiedliche Muster verschiedener Objekte können im Mutingsensor 7 erfasst und dadurch erkannt werden, dass die detektierten Muster mit jeweils einer in dem Mutingsensor 7 abgespeicherten oder vorher erfassten vollständigen oder teilweisen Kontur eines zulässigen Objekts verglichen werden. Es kann vorteilhaft sein die Bildbereiche zu entzerren, damit Muster von verschiedenen Bildpositionen oder verschiedenen Kameras einfach verglichen werden können. Vorteilhaft ist es wenn diese Entzerrungsparameter in einem Einlernprozess mit vorgebbaren Mustern eingelernt werden.

Die Konturen selbst können ebenfalls in Einlernvorgängen bestimmt oder als Parameter vorgegeben werden.

Wird durch diese Mustererkennung ein Objekt als zulässiges Objekt klassifiziert, so wird im Mutingsensor 7 ein Mutingsignal generiert. Dieses Mutingsignal wird an den Sicherheitssensor 4 ausgegeben. Durch das Mutingsignal wird der Mutingbetrieb des Sicherheitssensors 4 initiiert. Durch ein weiteres Mutingsignal wird der Mutingbetrieb des Sicherheitssensors 4 beendet. Vorteilhaft erfolgt die Initiierung des Mutingbetriebs unmittelbar vor Eintritt des zulässigen Objekts in den Überwachungsbereich, das Beenden des Mutingbetriebs erfolgt unmittelbar nach Ausfahren des zulässigen Objekts aus dem Überwachungsbereich.

Generell können die Mutingsignale auch im Sicherheitssensor 4 generiert werden, wobei hierzu Sensorsignale bei der Detektion des zulässigen Objekts in den Sicherheitssensor 4 eingelesen werden.

Im vorliegenden Fall ist das zulässige Objekt vom Fahrzeug 5 und/oder der Palette gebildet, wobei die mit dem Mutingsensor 7 erfassten Muster von dort angeordneten Markierungen und dergleichen gebildet sein können.

Da im Mutingsensor 7 Konturen unterschiedlicher zulässiger Objekte abgespeichert sein können, kann der Mutingsensor 7 entsprechend auch unterschiedliche zulässige Objekte erkennen.

Zur Erkennung von zulässigen Objekten kann im Mutingsensor 7 neben Musterdetektionen zu verschiedenen Zeiten auch die Wegstrecke und/oder die Bewegungseinrichtung des zulässigen Objekts erfasst werden, wie in Figur 5 mit dem Pfeil I veranschaulicht. Durch die zeitaufgelöste Erfassung der Musterabbildungen M (t₁), M (t₂) ist eine derartige Objektverfolgung eines Objekts möglich.

Als Kriterium dafür, dass ein zulässiges Objekt vorliegt, kann neben der Mustererkennung gefordert werden, dass die Wegstrecke und/oder Bewegungsrichtung innerhalb eines zugegebenen Sollwertbereichs liegt. Auch derartige Parameter können in Einlernvorgängen bestimmt werden.

Dadurch wird die Zuverlässigkeit der Erkennung von zulässigen Objekten weiter erhöht.

Zur Generierung sicherer Mutingsignale können weiterhin die zeitlichen Abstände der hierzu im Mutingsensor 7 generierten Signale überwacht werden.

### Bezugszeichenliste

- (1): Sicherheitseinrichtung
- (2): Gefahrenbereich
- (3): Anlage
- (4): Sicherheitssensor
- (5): Fahrzeug
- (6): Transportgut
- (7): Mutingsensor
- (8a): Gehäuse
- (8b): Gehäuse
- (9): Lichtstrahl
- (10): Sender
- (11): Empfänger
- (12): Sensorgehäuse
- (13): Bildsensor
- (14): Lichtstrahl
- (15): Sendereinheit
- (16): Auswerteeinheit
- (17a): Controller
- (17b): Controller
- (18): Mehrkernprozessor
- (19): Watchdog
- (20): Interface
- (21a): Schnittstellenmodul
- (21b): Schnittstellenmodul
- (22): Steuerleitung
- (23): Leitung
- (24): Sichtfeld
- (25): Positions-/Bewegungssignal

- (I): Pfeil
- M (t₁): Musterabbildung
- M (t₂): Musterabbildung

## Patentansprüche

1. Sicherheitseinrichtung (1) mit einem Sicherheitssensor (4) und einem Mutingsensor (7), wobei der Sicherheitssensor (4) zur Überwachung eines Überwachungsbereichs ausgebildet ist, wobei der Sicherheitssensor (4) ausgebildet ist eine Sicherheitsfunktion auszulösen, wenn dieser einen Objekteingriff im Überwachungsbereich detektiert, und wobei der Mutingsensor (7) ausgebildet ist, ein zulässiges Objekt zu detektieren, wobei mittels der Sicherheitseinrichtung (1) die Sicherheitsfunktion überbrückt wird, wenn mittels des Mutingsensors (7) ein zulässiges Objekt detektiert ist, **dadurch gekennzeichnet, dass** der Mutingsensor (7) ein optischer Sensor ist, welcher als Empfängereinheit einen Bildsensor (13) aufweist, wobei mit dem optischen Sensor ein bewegliches Objekt in wenigstens zwei unterschiedlichen Positionen erfasst wird, und wobei anhand der dabei mit dem Bildsensor (13) detektierten Muster beurteilt wird, ob das Objekt ein zulässiges Objekt ist oder nicht.

2. Sicherheitseinrichtung (1) nach Anspruch 1, **dadurch gekennzeichnet, dass** die detektierten Muster mit jeweils einer in dem Mutingsensor (7) abgespeicherten vollständigen oder teilweisen Kontur eines zulässigen Objekts verglichen werden, und/oder dass die Muster durch Bildverarbeitungsfilter oder Entzerrungsfilter bearbeitet werden.

3. Sicherheitseinrichtung (1) nach einem der Ansprüche 1 oder 2, **dadurch gekennzeichnet, dass** abhängig von Empfangssignalen des Bildsensors (13) im Mutingsensor (7) ein Mutingsignal generiert wird, oder dass Empfangssignale des Mutingsensors (7) an den Sicherheitssensor (4) übertragen werden, wobei im Sicherheitssensor (4) ein Mutingsignal generiert wird.

4. Sicherheitseinrichtung (1) nach Anspruch 3, **dadurch gekennzeichnet, dass** mittels eines Mutingsignals eine Überbrückung des Sicherheitssensors (4) initiiert oder beendet wird.

5. Sicherheitseinrichtung (1) nach einem der Ansprüche 1 bis 4, **dadurch gekennzeichnet, dass** im Mutingsensor (7) die Wegstrecke und/oder Bewegungsrichtung des detektierten Objekts innerhalb des Zeitintervalls zwischen den Detektionen der beiden Muster bestimmt wird und als Kriterium für das Vorhandensein eines zulässigen Objekts herangezogen wird.

6. Sicherheitseinrichtung (1) nach Anspruch 5, **dadurch gekennzeichnet, dass** Muster, Wegstrecken und/oder Bewegungsrichtungen und/oder Verzerrungen in Einlernvorgängen eingelernt werden.

7. Sicherheitseinrichtung (1) nach einem der Ansprüche 1 bis 6, **dadurch gekennzeichnet, dass** der Mutingsensor (7) zwei räumlich versetzt angeordnete Bildsensoren (13) aufweist, mittels derer diversitäre Bildaufnahmen generiert werden.

8. Sicherheitseinrichtung (1) nach einem der Ansprüche 1 bis 7, **dadurch gekennzeichnet, dass** der Mutingsensor (7) zwei oder mehrere Muster erfasst, Bildverzerrungen kompensiert und die so korrigierten Muster vergleicht.

9. Sicherheitseinrichtung (1) nach einem der Ansprüche 1 bis 8, **dadurch gekennzeichnet, dass** die Informationen des Mutingsensors (7) zusätzlich mit Positions-Bewegungssignalen (25) überprüft werden.

10. Sicherheitseinrichtung (1) nach einem der Ansprüche 1 bis 9, **dadurch gekennzeichnet, dass** der Mutingsensor (7) fehlersichere Signale generiert.

11. Sicherheitseinrichtung (1) nach einem der Ansprüche 1 bis 10, **dadurch gekennzeichnet, dass** der Mutingsensor (7) eine mehrkanalige Auswerteeinheit (16) aufweist, wobei in der Auswerteeinheit (16) Empfangssignale des oder jedes Bildsensors (13) ausgewertet werden.

12. Sicherheitseinrichtung (1) nach Anspruch 11, **dadurch gekennzeichnet, dass** die Auswerteeinheit (16) zwei Controllerkanäle aufweist.

13. Sicherheitseinrichtung (1) nach Anspruch 12, **dadurch gekennzeichnet, dass** die Controllerkanäle in Form eines Mehrkernprozessors (18) ausgeführt sind, und/oder dass die Controllerkanäle mittels eines Watchdogs (19) überwacht werden.

14. Sicherheitseinrichtung (1) nach einem der Ansprüche 11 bis 13, **dadurch gekennzeichnet, dass** im Mutingsensor (7) oder im Sicherheitssensor (4) die zeitlichen Abstände von im Mutingsensor (7) generierten Signalen überwacht werden.

15. Verfahren zum Betrieb einer Sicherheitseinrichtung (1) mit einem Sicherheitssensor (4) und einem Mutingsensor (7), wobei der Sicherheitssensor (4) zur Überwachung eines Überwachungsbereichs ausgebildet ist, wobei der Sicherheitssensor (4) ausgebildet ist eine Sicherheitsfunktion auszulösen, wenn dieser einen Objekteingriff im Überwachungsbereich detektiert, und wobei der Mutingsensor (7) ausgebildet ist ein zulässiges Objekt zu detektieren, wobei mittels der Sicherheitseinrichtung (1) die Sicherheitsfunktion überbrückt wird, wenn mittels des Mutingsensors (7) ein zulässiges Objekt detektiert ist, **dadurch gekennzeichnet, dass** der Mutingsensor (7) ein optischer Sensor ist, welcher als Empfängereinheit einen Bildsensor (13) aufweist, wobei mit dem optischen Sensor ein bewegliches Objekt in wenigstens zwei unterschiedlichen Positionen erfasst wird, und wobei anhand der dabei mit dem Bildsensor (13) detektierten Muster beurteilt wird, ob das Objekt ein zulässiges Objekt ist oder nicht.
